# EUROPEAN PATENT SPECIFICATION

(11) **EP 4 148 845 B1**
(45) Date of publication and mention of the grant of the patent: **29.04.2026**
(21) Application number: 21929946.8
(22) Date of filing: 06.12.2021
(51) Int. Cl.: H01M 10/04, H01M 50/586

(54) **BATTERY CELL AND MANUFACTURING METHOD AND MANUFACTURING SYSTEM THEREFOR, BATTERY, AND POWERED DEVICE**
BATTERIEZELLE UND HERSTELLUNGSVERFAHREN UND HERSTELLUNGSSYSTEM DAFÜR, BATTERIE UND STROMGETRIEBENE VORRICHTUNG
ÉLÉMENT DE BATTERIE, ET SON PROCÉDÉ DE FABRICATION ET SON SYSTÈME DE FABRICATION, BATTERIE ET DISPOSITIF ALIMENTÉ

(30) Priority: 09.03.2021 CN 202110257260
(43) Date of publication of application: 15.03.2023
(73) Proprietor: Contemporary Amperex Technology (Hong Kong) Limited, Central, Central And Western District (HK)
(72) Inventor: LI, Quankun, Ningde, Fujian 352100 (CN); LIU, Wenzhong, Ningde, Fujian 352100 (CN); SU, Huasheng, Ningde, Fujian 352100 (CN); ZOU, Qifan, Ningde, Fujian 352100 (CN); WANG, Peng, Ningde, Fujian 352100 (CN)
(74) Representative: Gong, Jinping
(86) International application number: PCT/CN2021/135788
(87) International publication number: WO 2022/188484

(56) References cited:
- CN-A- 1 728 435
- CN-A- 107 026 291
- CN-A- 107 026 291
- CN-Y- 201 266 617
- JP-A- 2004 119 330
- JP-A- 2004 119 330
- JP-A- H10 340 737
- JP-A- H10 340 737
- KR-A- 20080 095 612
- KR-A- 20080 095 612
- US-B2- 10 636 576

## Description

### TECHNICAL FIELD

This application relates to the technical field of batteries, and more specifically, to a battery cell as specified in any of claims 1-11, a manufacturing method of same as specified in claim 14, a battery as specified in claim 12, and an electric device as specified in claim 13.

### BACKGROUND

A battery cell includes an electrode assembly. The electrode assembly is typically electrically connected to electrode terminals or end covers via a current collecting member, and the current collecting member is typically connected to the electrode assembly by welding, see, e.g., US 10 636 576 B2.
During welding, metal particles are produced, and if left inside the battery cell, may result in a short circuit.

### SUMMARY

The claimed subject-matter is defined by the appended claims. This application provides a battery cell as specified in any of claims 1-11, a manufacturing method of same as specified in claim 14, a battery as specified in claim 12, and an electric device as specified in claim 13, with which risks of short circuit can be reduced.

According to a first aspect, an embodiment of this application provides a battery cell as specified in any of claims 1-11, including an electrode assembly; a housing configured to accommodate the electrode assembly and having an opening; an end cover configured to close the opening of the housing; and a current collecting member configured to electrically connect the electrode assembly to the end cover, where the current collecting member is at least partly located between the electrode assembly and the end cover and abuts against the electrode assembly, and thus the current collecting member is connected to the electrode assembly without welding; the current collecting member has a first hole, where the first hole is configured to accommodate part of the electrode assembly and make the electrode assembly contact a hole wall of the first hole, so as to increase an area of electrical connection between the current collecting member and the electrode assembly. The end cover has a first surface facing the electrode assembly and a first depression portion recessed relative to the first surface, and a base portion of the current collecting member is at least partly accommodated in the first depression portion.

In the foregoing solution, the current collecting member abuts against the electrode assembly and is thus connected to the electrode assembly without welding, which reduces metal particles left in the battery cell, thereby decreasing risks of short circuit. Providing the current collecting member with the first hole can decrease the strength of the current collecting member. When the current collecting member and the electrode assembly press against each other, the current collecting member can locally transform to fit the electrode assembly, so that a gap between the current collecting member and the electrode assembly can be reduced, thereby increasing a current flow capacity. With the electrode assembly partly extending into the first hole and contacting the hole wall of the first hole, a contact area between the current collecting member and the electrode assembly can be increased, thereby increasing the current flow capacity.

In some embodiments, the first hole is provided in plurality. The plurality of first holes can reduce the strength of the current collecting member, making the current collecting member transform more easily to fit the electrode assembly.

In some embodiments, the plurality of first holes are equally spaced along a circumferential direction of the current collecting member. In such a manner, the current collecting member can more uniformly contact the electrode assembly so that current can be more uniformly transmitted to the outside.

In some embodiments, in a radial direction of the current collecting member, a size, along the circumferential direction, of the first hole gradually increases from inside outwards. In this way, the current collecting member may have a uniform strength, and the risk can be decreased that the current collecting member breaks.

In some embodiments, the current collecting member includes a base portion and a first protrusion portion connected to the base portion, where the base portion is located between the electrode assembly and the end cover and abuts against the electrode assembly, the first hole is formed at the base portion, and the first protrusion portion protrudes, relative to the base portion, towards the electrode assembly and is inserted to the electrode assembly. Providing the first protrusion portion can increase the contact area between the current collecting member and the electrode assembly, which increases the current flow capacity between the current collecting member and the electrode assembly.

In some embodiments, a cross-sectional area, perpendicular to a thickness direction of the base portion, of the first protrusion portion gradually decreases along a direction leaving the base portion, so as to more easily insert the first protrusion portion into the electrode assembly.

In some embodiments, the first protrusion portion is annular.

In some embodiments, the electrode assembly includes a body portion and a tab portion connected to the body portion. The current collecting member includes a base portion and a second protrusion portion connected to the base portion, where the tab portion is located between the body portion and the base portion, the base portion abuts against the tab portion, the first hole is formed at the base portion, and the tab portion partly extends into the first hole and contacts the hole wall of the first hole. The second protrusion portion protrudes, relative to the base portion, towards the body portion, and surrounds the tab portion. The second protrusion can gather the tab portion.

In some embodiments, the end cover has an electrolyte injection hole for injecting electrolyte, and the current collecting member has a second hole, where the second hole runs through the current collecting member along a thickness direction of the current collecting member, and the second hole and the electrolyte injection hole are disposed opposite each other along the thickness direction. During injection, the electrolytes can pass through the second hole and infiltrate into the electrode assembly.

In some embodiments, the first hole runs through the current collecting member along a thickness direction of the current collecting member. The first hole is a through hole which is easy to form and can effectively decrease the strength of the current collecting member.

Providing the first depression portion can reduce space occupied by the end cover and the current collecting member and increase energy density of the battery cell. Providing the first depression portion can also facilitate positioning of the current collecting member, so as to simplify fitting processes of the end cover and the current collecting member.

In some embodiments, the current collecting member is welded to the end cover; and/or the current collecting member and the first depression portion are interference fitted.

In some embodiments, the current collecting member abuts against the electrode assembly via a conductive medium. Providing a conductive medium having a relatively good electrical conductivity can help better output a stable current.

According to a second aspect, an embodiment of this application further provides a battery as specified in claim 12 including at least one battery cell according to any one of the embodiments of the first aspect.

According to a third aspect, an embodiment of this application further provides an electric device as specified in claim 13 including the battery according to any one of the embodiments of the second aspect, where the battery is configured to provide electric energy.

According to a fourth aspect, an embodiment of this application further provides a manufacturing method of battery cell as specified in claim 14, the method including: providing an end cover; providing a current collecting member, where the current collecting member has a first hole; connecting the current collecting member to the end cover; providing an electrode assembly; providing a housing, wherein the housing has an opening; putting, through the opening, the electrode assembly into the housing; and connecting the end cover, which is connected to the current collecting member, to the housing, so as to close the opening of the housing and electrically connect the current collecting member to the electrode assembly and the end cover. The current collecting member is at least partly located between the electrode assembly and the end cover and abuts against the electrode assembly, and thus the current collecting member is connected to the electrode assembly without welding; and the first hole is configured to accommodate part of the electrode assembly and make the electrode assembly contact a hole wall of the first hole wherein the end cover has a first surface facing the electrode assembly and a first depression portion recessed relative to the first surface, and a base portio of the current collecting member is at least partly accommodated in the first depression portion.

In a non-claimed aspect, an embodiment of this application further provides a manufacturing system of battery cell, the system including: a first providing apparatus configured to provide an end cover; a second providing apparatus configured to provide a current collecting member, where the current collecting member has a first hole; a first assembling apparatus configured to connect the current collecting member to the end cover; a third providing apparatus configured to provide an electrode assembly; a fourth providing apparatus configured to provide a housing, where the housing has an opening; a second assembling apparatus configured to put, through the opening, the electrode assembly into the housing; and a third assembling apparatus configured to connect the end cover, which is connected to the current collecting member, to the housing, so as to close the opening of the housing and electrically connect the current collecting member to the electrode assembly and the end cover. The current collecting member is at least partly located between the electrode assembly and the end cover and abuts against the electrode assembly, and the first hole is configured to accommodate part of the electrode assembly and make the electrode assembly contact a hole wall of the first hole.

### BRIEF DESCRIPTION OF DRAWINGS

The following describes features, advantages, and technical effects of the example embodiments of this application with reference to the accompanying drawings.
FIG. 1 is a schematic structural diagram of a vehicle according to some embodiments of this application;
FIG. 2 is a schematic exploded view of a battery according to some embodiments of this application;
FIG. 3 is a schematic exploded view of a battery module shown in FIG. 2;
FIG. 4 is a schematic structural diagram of a battery cell shown in FIG. 3;
FIG. 5 is a schematic exploded view of the battery cell shown in FIG. 4;
FIG. 6 is a schematic cross-sectional view of a battery cell according to some embodiments of this application;
FIG. 7 is a schematic diagram of the battery cell shown in FIG. 6 enlarged in block A;
FIG. 8 is a schematic structural diagram of a current collecting member of a battery cell according to some embodiments of this application;
FIG. 9 is a schematic top view of the current collecting member shown in FIG. 8;
FIG. 10 is a schematic cross-sectional view of the current collecting member in FIG. 9 along line B-B.
FIG. 11 is a schematic structural diagram of a current collecting member of a battery cell according to other embodiments of this application;
FIG. 12 is a schematic structural diagram of a current collecting member of a battery cell according to yet other embodiments of this application;
FIG. 13 is a schematic view of a local cross section of a battery cell according to other embodiments of this application;
FIG. 14 is a schematic flowchart of a manufacturing method of battery cell according to some embodiments of this application; and
FIG. 15 is a schematic block diagram of a manufacturing system of battery cell according to some embodiments of this application.

In the accompanying drawings, the figures are not necessarily drawn to scale.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts fall within the protection scope of this application as claimed by the appended claims.

Unless otherwise defined, all technical and scientific terms used in this application shall have the same meanings as commonly understood by those skilled in the art to which this application belongs. The terms used in the specification of this application are merely intended to describe the specific embodiments but not intended to constitute any limitation on this application. The terms "include", "comprise", and any variations thereof in the specification and claims of this application and the foregoing description of drawings are intended to cover non-exclusive inclusions. In the specification, claims, or accompanying drawings of this application, the terms "first", "second", and the like are intended to distinguish between different objects but do not indicate a particular order or relative importance.

An "embodiment" mentioned in this application means that specified features, structures, or characteristics described with reference to this embodiment may be included in at least one embodiment of this application. The word "embodiment" in various places in the specification does not necessarily refer to a same embodiment, or an independent or alternative embodiment that is exclusive of other embodiments.

In the descriptions of this application, it should be noted that unless otherwise specified and defined explicitly, the terms "mount", "connect", "join", and "attach" should be understood in their general senses. For example, they may refer to a fixed connection, a detachable connection, or an integral connection, and may be a direct connection, an indirect connection via an intermediate medium, or an internal communication between two elements. A person of ordinary skills in the art can understand specific meanings of these terms in this application as appropriate to specific situations.

The term "and/or" in this application describes only an association relationship for describing associated objects and represents that three relationships may exist. For example, A and/or B may represent the following three cases: A alone, both A and B, and B alone. In addition, the character "/" in this application generally indicates an "or" relationship between the associated objects.

In the embodiments of this application, the same reference signs denote the same components. For brevity, in different embodiments, detailed descriptions of the same components are omitted. It should be understood that the thicknesses, lengths, and widths of the parts, and the total thickness, length and width of an integrated apparatus in the embodiments of this application as shown in the accompanying drawings are only illustrative without constituting any specific limitation on this application.

In this application, "a plurality of" means more than two (inclusive).

In this application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, rectangular, or another shape, and this is also not limited in the embodiments of this application. Battery cells are typically divided into three types by packaging method: cylindrical cell, prismatic cell, and pouch cell. This is not limited in this embodiment of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of positive electrode current collector uncoated with the positive electrode active substance layer protrudes out of the part of positive electrode current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of negative electrode current collector uncoated with the negative electrode active substance layer protrudes out of the part of negative electrode current collector coated with the negative electrode active substance layer and serves as a negative tab. The negative electrode current collector may be made of copper, and the negative electrode active substance may be carbon, silicon, or the like. To allow a large current to pass through without any fusing, a plurality of positive tabs are provided and stacked together, and a plurality of negative tabs are provided and stacked together. The separator may be made of PP (polypropylene, polypropylene) or PE (polyethylene, polyethylene), or the like. In addition, the electrode assembly may be a winding structure or a laminated structure, but the embodiments of this application are not limited thereto.

The battery cell also includes an enclosure, and the enclosure is configured to accommodate the electrode assembly and the electrolyte. The enclosure includes a housing and an end cover connected to the housing, where the housing and the end cover form an accommodating cavity to accommodate the electrode assembly and the electrolyte. In a general battery cell, the electrode assembly is typically electrically connected to the end cover or an electrode terminal provided on the end cover via a current collecting member, where the current collecting member is typically connected to the electrode assembly by welding. The inventors have found that during welding, metal particles are produced, which, if left inside the battery cell, may result in a short circuit.

In view of this, the embodiments of this application provide a technical solution, where a battery cell includes an electrode assembly; a housing configured to accommodate the electrode assembly and having an opening; an end cover configured to close the opening of the housing; and a current collecting member configured to electrically connect the electrode assembly to the end cover, where the current collecting member is at least partly located between the electrode assembly and the end cover and abuts against the electrode assembly; the current collecting member has a first hole, where the first hole is configured to accommodate part of the electrode assembly and make the electrode assembly contact a hole wall of the first hole, so as to increase an area of electrical connection between the current collecting member and the electrode assembly. The battery cell in such a structure has no need of welding the electrode assembly and the current collecting member, thereby decreasing metal particles left in the battery cell and lowering safety risks.

The technical solution described in the embodiments of this application is applicable to batteries and electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric vehicle toy, an electric ship toy, an electric airplane toy, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as example for description in the following embodiments.

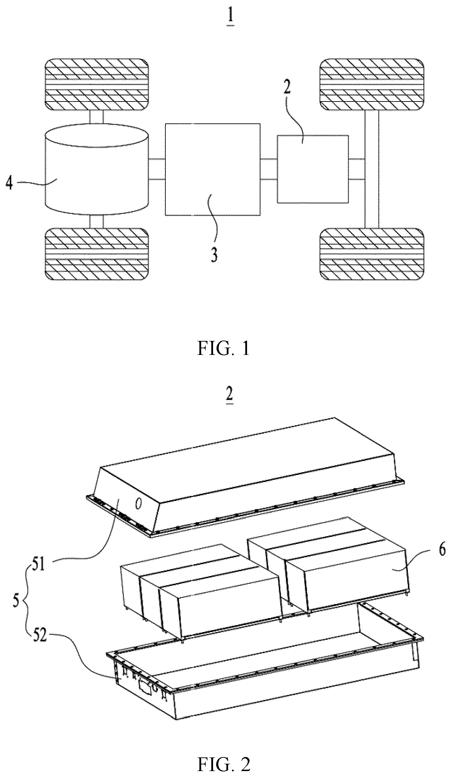

FIG. 1 is a schematic structural diagram of a vehicle 1 according to some embodiments of this application. As shown in FIG. 1, the vehicle 1 is provided with a battery 2 inside, and the battery 2 may be disposed at the bottom or in the front or at the rear of the vehicle 1. The battery 2 may be configured to supply power to the vehicle 1. For example, the battery 2 may be used as an operational power supply for the vehicle 1.

The vehicle 1 may further include a controller 3 and a motor 4, where the controller 3 is configured to control the battery 2 to supply power to the motor 4, for example, to satisfy a working electricity need during start, navigation, and driving of the vehicle 1.

In some embodiments of this application, the battery 2 can be used as not only the operational power supply for the vehicle 1 but also a driving power supply for the vehicle 1, replacing all or part of fossil fuel or natural gas to provide driving power for the vehicle 1.

FIG. 2 is a schematic exploded view of a battery 2 according to some embodiments of this application. As shown in FIG. 2, the battery 2 includes a box 5 and a battery cell (not shown in FIG. 2), and the battery cell is accommodated in the box 5.

The box 5 is configured to accommodate the battery cell and can have a plurality of structures. In some embodiments, the box 5 may include a first box portion 51 and a second box portion 52, where the first box portion 51 and the second box portion 52 are mutually engaged, and the first box portion 51 and the second box portion 52 together define an accommodating space configured to accommodate the battery cell. The second box portion 52 may be a hollow structure having an opening at one end, and the first box portion 51 is a plate structure, where the first box portion 51 is engaged to an opening side of the second box portion 52 to form the box 5 having an accommodating space; the first box portion 51 and the second box portion 52 each may be a hollow structure having an opening at one end, where an opening side of the first box portion 51 is engaged to that of the second box portion 52 to form the box 5 having an accommodating space. Certainly, the first box portion 51 and the second box portion 52 may have various shapes, for example, being cylindrical or cuboid.

To increase sealing performance after the first box portion 51 and the second box portion 52 are connected, a sealing piece, for example, a sealant or a sealing ring, may also be provided between the first box portion 51 and the second box portion 52.

Assuming that the first box portion 51 is engaged to the top of the second box portion 52, the first box portion 51 may also be referred to as an upper box cover, and the second box portion 52 may also be referred to as a lower box body.

In the battery 2, one or more battery cells may be provided. If there are a plurality of battery cells, the plurality of battery cells may be connected in series, in parallel or in series-parallel, where the series-parallel connection means a combination of series and parallel connections between the plurality of battery cells. The plurality of battery cells may be directly connected in series, in parallel or in series-parallel, and then an entirety formed by the plurality of battery cells is accommodated in the box 5; or certainly, a plurality of battery cells may be connected in series, in parallel or in series-parallel first to form a battery module 6, and then a plurality of battery modules 6 are connected in series, in parallel or in series-parallel to form an entirety which is accommodated in the box 5.

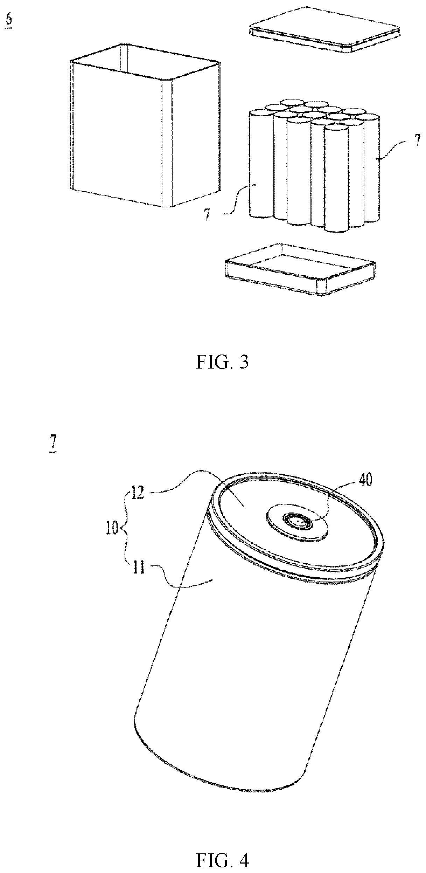

FIG. 3 is a schematic exploded view of the battery module 6 shown in FIG. 2. In some embodiments, as shown in FIG. 3, a plurality of battery cells 7 are provided, where a plurality of battery cells 7 are connected in series, in parallel, or in series-parallel first to form a battery module 6, and then a plurality of battery modules 6 may be connected in series, in parallel, or in series-parallel to form an entirety which is accommodated in a box.

The plurality of battery cells 7 in the battery module 6 may be electrically connected via a busbar, so that the plurality of battery cells 7 in the battery module 6 can be connected in series, in parallel or in series-parallel.

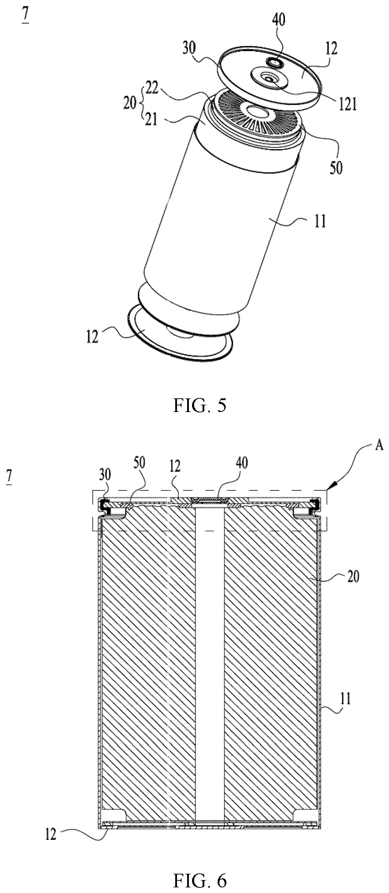

FIG. 4 is a schematic structural diagram of the battery cell 7 shown in FIG. 3, and FIG. 5 is a schematic exploded view of the battery cell 7 shown in FIG. 4. As shown in FIG.4 and FIG. 5, the battery cell 7 according to the embodiments of this application includes an enclosure 10 and an electrode assembly 20, and the electrode assembly 20 is accommodated in the enclosure 10.

According to the appearance of the electrode assembly 20, the electrode assembly 20 includes a body portion 21 and a tab portion 22 connected to the body portion 21. In some embodiments, two tab portions 22 are provided and extend out from two ends of the body portion 21, respectively. The body portion 21 includes a positive electrode active substance layer, a part, which has been coated with the positive electrode active substance layer, of a positive electrode current collector, a negative electrode active substance layer, a part, which has been coated with the negative electrode active substance layer, of a negative electrode current collector, and a separator. The two tab portions 22 are a positive tab and a negative tab, respectively. In some embodiments, the electrode assembly 20 is a winding structure, and correspondingly, each tab portion 22 is wound into a multi-layer structure.

In some embodiments, the enclosure 10 may also be configured to accommodate an electrolyte such as a liquid electrolyte. The enclosure 10 may have various structure forms.

In some embodiments, the enclosure 10 may include a housing 11 and an end cover 12, where the housing 11 is a hollow structure having an opening, and the end cover 12 is engaged to the opening of the housing 11 to form a sealed connection so as to form a sealed space to accommodate the electrode assembly 20 and the electrolyte.

During assembling the battery cell 7, the electrode assembly 20 may be put in the housing 11 first, then the end cover 12 is engaged to the opening of the housing 11, and finally the electrolyte is injected into the housing 11 through an electrolyte injection hole 121 in the end cover 12.

The housing 11 may have various shapes, for example, being cylindrical or cuboid. The shape of the housing 11 may be determined depending on a specific shape of the electrode assembly 20. For example, if the electrode assembly 20 is a cylindrical structure, a cylindrical housing may be selected; if the electrode assembly 20 is a cuboid structure, a cuboid housing may be selected. Certainly, the end cover 12 may be various structures. For example, the end cover 12 may be a plate structure or a hollow structure having an opening at one end. Exemplarily, in FIG. 4 and FIG. 5, the housing 11 is a cylindrical structure, and the end cover 12 is a plate structure, where the end cover 12 is engaged to the opening of the housing 11.

In some embodiments, the battery cell 7 further includes a sealing member 30, where the sealing member 30 separates the end cover 12 and the housing 11. The sealing member 30 is configured to seal the opening of the housing 11, so as to increase airtightness of the battery cell 7. A material of the sealing member 30 may be PP, PE, PFA or fluororubber. In some embodiments, the sealing member 30 is made of an insulating material which can insulate the end cover 12 from the housing 11.

In some embodiments, the enclosure 10 includes a housing 11 and two end covers 12, where the housing 11 is a hollow structure having openings at two opposite sides, and each end cover 12 is correspondingly engaged to a corresponding opening of the housing 11 to form a sealed connection so as to form a sealed space to accommodate the electrode assembly 20 and the electrolyte. In some embodiments, one end cover 12 may be directly connected to the housing 11, for example, welded to the housing 11, and the sealing member 30 insulates the other end cover 12 from the housing 11. In some embodiments, one tab portion 22 is located between the body portion 21 and one end cover 12, and the other tab portion 22 is located between the body portion 21 and the other end cover 12. The two end covers 12 are electrically connected to the two tab portions 22 respectively, and may be used as a positive electrode terminal and a negative electrode terminal of the battery cell 7 respectively to output electrical energy produced by the electrode assembly 20.

In some other embodiments, the enclosure 10 includes a housing 11 and one end cover 12, where the housing 11 is a hollow structure having an opening at one side, and the end cover 12 is engaged to the opening of the housing 11 to form a sealed connection. In some embodiments, one tab portion 22 is located between the body portion 21 and the one end cover 12, and the other tab portion 22 is located between the body portion 21 and a base plate of the housing 11. The end cover 12 and the housing 11 are electrically connected to the two tab portions 22 respectively, and may be used as a positive electrode terminal and a negative electrode terminal of the battery cell 7 respectively to output electrical energy produced by the electrode assembly 20.

In some embodiments, at least one end cover 12 is provided with an electrolyte injection hole 121, where the electrolyte injection hole 121 runs through the end cover 12 along the thickness direction of the end cover 12. During injection for the battery cell 7, the electrolyte enters the battery cell 7 through the electrolyte injection hole 121. The battery cell 7 further includes a sealing plate 40 connected to the end cover 12 and covering the electrolyte injection hole 121, where the sealing plate 40 is configured to seal the electrolyte injection hole 121 after injection is completed.

In some embodiments, the battery cell 7 further includes a current collecting member 50 configured to electrically connect the electrode assembly 20 and the end cover 12. The current collecting member 50 is able to transmit current between the electrode assembly 20 and the end cover 12. In some embodiments, the current collecting member 50 is a metal sheet, for example, a nickel sheet.

In some embodiments, the battery cell 7 is cylindrical, and the current collecting member 50 is roughly in a disc shape.

In some embodiments, the current collecting member 50 is at least partly located between the electrode assembly 20 and the end cover 12 and abuts against the electrode assembly 20. During assembling the battery cell 7, the end cover 12 makes the current collecting member 50 abut against the electrode assembly 20 by pressing against the collecting member 50, so that the current collecting member 50 can keep contacting the end cover 12 and the electrode assembly 20. The current collecting member 50 is fit between the end cover 12 and the electrode assembly 20 in an interference fitting manner to transmit current between the electrode assembly 20 and the end cover 12. In this embodiment, the current collecting member 50 abuts against the electrode assembly 20 and is thus connected to the electrode assembly 20 without welding, which reduces metal particles left in the battery cell 7, thereby decreasing risks of short circuit.

The electrode assembly 20 has an end surface facing the current collecting member 50, where the end surface is configured to contact the surface of the current collecting member 50, and thus is a surface of the tab portion 22 away from the body portion 21. However, the inventors have found that the end surface of the electrode assembly 20 has a poor flatness (for example, in a wound electrode assembly 20, the tab portion 22 includes a metal foil wound in a plurality of turns, where a free end of the metal foil forms the end surface, and because of limitation by the winding accuracy, the end surface has a poor flatness), and there is a difference in flatness between the end surface of the electrode assembly 20 and the surface of the current collecting member 50. Therefore, there may be a gap between the electrode assembly 20 and the current collecting member 50, which may cause poor contact and affect the current flow capacity.

Based on the foregoing problem found, the applicant improved the structure of the battery cell 7. Detailed description will be made hereinafter with reference to different embodiments.

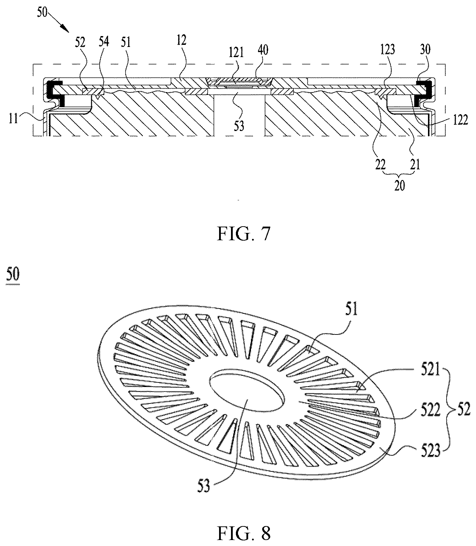

FIG. 6 is a schematic view of a cross section of a battery cell 7 according to some embodiments of this application. FIG. 7 is a schematic diagram of the battery cell 7 shown in FIG. 6 enlarged in block A.

As shown in FIG. 6 and FIG. 7. in the battery cell 7 of the embodiments of this application, a current collecting member 50 has a first hole 51, where the first hole 51 is configured to accommodate part of an electrode assembly 20 and make the electrode assembly 20 contact a hole wall of the first hole 51, so as to increase an area of electrical connection between the current collecting member 50 and the electrode assembly 20.

The first hole 51 has an opening at an end facing the electrode assembly 20. During assembling the battery cell 7, the current collecting member 50 presses against an end surface of the electrode assembly 20, and the electrode assembly 20 partly extend into the first hole 51. Specifically, a tab portion 22 of the electrode assembly 20 partly extends into the first hole 51 and contacts the hole wall of the first hole 51.

In the battery cell 7 of the embodiments of this application, providing the current collecting member 50 with the first hole 51 can decrease the strength of the current collecting member 50. Although there is a difference in flatness between the end surface of the electrode assembly 20 and the surface of the current collecting member 50, when the current collecting member 50 and the electrode assembly 20 press against each other, the current collecting member 50 can locally transform to fit the electrode assembly 20, so that a gap between the current collecting member 50 and the electrode assembly 20 can be reduced, thereby increasing the current flow capacity. With the electrode assembly 20 partly extending into the first hole 51 and contacting the hole wall of the first hole 51, a contact area between the current collecting member 50 and the electrode assembly 20 can be increased, thereby increasing the current flow capacity.

The first hole 51 may be a through hole having openings at two ends, or may be a blind hole having an opening at one end.

In some embodiments, the first holes 51 runs through the current collecting member 50 along a thickness direction Z of the current collecting member 50. In this case, the first hole 51 is a through hole. Compared with a blind hole, a through hole is easier to form, and can decrease the strength of the current collecting member 50 more effectively. In some embodiments, the electrode assembly 20 partly extends into the first hole 51 and contacts an end cover 12, which can shorten a conductive path and increase the current flow capacity.

In some embodiments, the current collecting member 50 includes a base portion 52, where the base portion 52 is located between the electrode assembly 20 and the end cover 12 and abuts against the electrode assembly 20. The first hole 51 is formed at the base portion 52. The base portion 52 is connected to the end cover 12. In some examples, the base portion 52 may be connected to the end cover 12 by buckling, interference fitting, welding or other manners.

In some embodiments, the base portion 52 is roughly in a shape of a flat plate; for example, the base portion 52 is a circular flat plate. Two opposite surfaces of the base portion 52 in the thickness direction of the base portion 52 are flat, and face the end cover 12 and the electrode assembly 20 respectively. The surface of the base portion 52 facing the electrode assembly 20 is configured to contact the end surface of the electrode assembly 20.

In some embodiments, the tab portion 22 is located between a body portion 21 and the base portion 52, where the base portion 52 abuts against the tab portion 22, and the tab portion 22 partly extends into the first hole 51 and contacts the hole wall of the first hole 51.

In some embodiments, the end cover 12 has a first surface 122 facing the electrode assembly 20 and a first depression portion 123 recessed relative to the first surface 122, and the base portion 52 is at least partly accommodated in the first depression portion 123. The first depression portion 123 is recessed, relative to the first surface 122, towards a direction leaving the electrode assembly 20. In some examples, the first surface 122 is flat.

Providing the first depression portion 123 can reduce space occupied by the end cover 12 and the current collecting member 50 and increase energy density of the battery cell 7. In addition, during assembling the battery cell 7, the end cover 12 may be fit to the current collecting member 50 in advance, and then they are fit to the electrode assembly 20. Providing the first depression portion 123 can also facilitate positioning of the current collecting member 50, so as to simplify fitting processes of the end cover 12 and the current collecting member 50.

In some embodiments, the base portion 52 of the current collecting member 50 is connected to the end cover 12. The connection manner between the base portion 52 and the end cover 12 may be selected as needed.

In some embodiments, the base portion 52 and the first depression portion 123 are interference fitted to buckle the base portion 52 to the end cover 12. Metal particles are not easy to be produced in this assembling manner.

In some other examples, the base portion 52 is welded to the end cover 12; during welding, a laser may be applied to a side of the end cover 12 away from the base portion 52, which can decrease risks of metal particles produced by welding entering the battery cell 7.

In still other embodiments, the base portion 52 and the first depression portion 123 are interference fitted, and the base portion 52 is welded to the end cover 12, which can increase the current flow capacity between the base portion 52 and the end cover 12. In addition, in this application, the end cover 12 and the base portion 52 may be welded during fitting of the end cover 12 and the current collecting member 50, or may be welded from the outside after the end cover 12 and a housing 11 are fitted together.

In yet still other embodiments, the base portion 52 may be bonded to the end cover 12 via a conductive adhesive.

In some embodiments, the current collecting member 50 abuts against the electrode assembly 20 via a conductive medium. Providing a conductive medium having a relatively good electrical conductivity can help better output a stable current. For example, the conductive medium may be a conductive adhesive, silver or other materials. In some embodiments, the base portion 52 abuts against the electrode assembly 20 via a conductive medium.

In some embodiments, the current collecting member 50 has a second hole 53, where the second hole 53 runs through the current collecting member 50 along a thickness direction Z of the current collecting member 50, and the second hole 53 and an electrolyte injection hole 121 are disposed opposite each other along the thickness direction Z. In some examples, the second hole 53 is formed at the base portion 52. During injection, electrolyte may pass through the second hole 53 and infiltrate into the electrode assembly 20.

In some embodiments, along the thickness direction Z of the current collecting member 50, an orthographic projection of the electrolyte injection hole 121 is located within an orthographic projection of the second hole 53.

In some embodiments, the current collecting member 50 further includes a first protrusion portion 54 connected to the base portion 52, where the first hole 51 is formed at the base portion 52, and the first protrusion portion 54 protrudes, relative to the base portion 52, towards the electrode assembly 20 and is inserted to the electrode assembly 20. The first protrusion portion 54 protrudes out of a surface of the base portion 52 facing the electrode assembly 20, and the first protrusion portion 54 is inserted to the tab portion 22. Providing the first protrusion portion 54 can increase the contact area between the current collecting member 50 and the electrode assembly 20, which increases the current flow capacity between the current collecting member 50 and the electrode assembly 20.

In some examples, the first protrusion portion 54 may be a solid structure. In some other examples, a side of the first protrusion portion 54 facing away from the electrode assembly 20 is provided with a second depression portion (not shown); that is, the first protrusion portion 54 is a protruding mass which is formed by stamping.

In some embodiments, a cross-sectional area, perpendicular to a thickness direction of the base portion 52, of the first protrusion portion 54 gradually decreases along a direction leaving the base portion 52. An end of the first protrusion portion 54 away from the base portion 52 is a small end such that the first protrusion portion 54 is inserted to the tab portion 22 more easily during assembling. The thickness direction of the base portion 52 is the same as the thickness direction Z of the current collecting member 50.

In some embodiments, the first protrusion portion 54 is annular. In some embodiments, the first protrusion portion 54 is provided in plurality, where the plurality of first protrusion portions 54 are spaced apart along a radial direction of the base portion 52.

In some embodiments, the current collecting member 50 is an integral structure. For example, the current collecting member 50 is integrally formed by processing a metal plate.

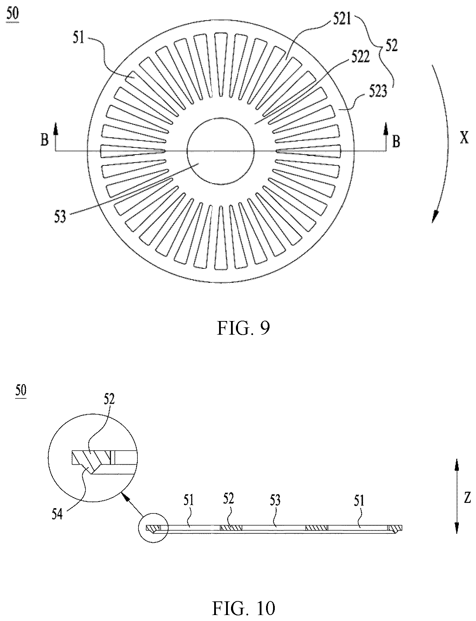

FIG. 8 is a schematic structural diagram of the current collecting member 50 of the battery cell 7 according to some embodiments of this application. FIG. 9 is a schematic top view of the current collecting member 50 shown in FIG. 8. FIG. 10 is a schematic cross-sectional view of the current collecting member 50 in FIG. 9 along line B-B.

Referring to FIG. 7 to FIG. 10, in some embodiments, the first hole 51 is provided in plurality. The plurality of first holes 51 can reduce the strength of the current collecting member 50, making the current collecting member 50 transform more easily to fit the electrode assembly 20. Under a given total area of first holes 51, this application can reduce an area of each first hole 51 to increase the number of first holes 51.

In some embodiments, the plurality of first holes 51 are equally spaced along a circumferential direction X of the current collecting member 50. Specifically, in some embodiments, the plurality of first holes 51 are equally spaced in the base portion 52 along a circumferential direction of the base portion 52. The circumferential direction X of the current collecting member 50 is the same as the circumferential direction of the base portion 52. The base portion 52 includes a plurality of partition regions 521, where the plurality of partition regions 521 and the plurality of first holes 51 are arranged alternately along the circumferential direction X. The first hole 51 is located between two adjacent partition regions 521. The partition regions 521 are configured to abut against the tab portion 22. The plurality of partition regions 521 being equally spaced along the circumferential direction X can make the plurality of partition regions 521 contact the tab portion 22 more uniformly, so that current is transmitted to the outside more uniformly.

In some embodiments, the base portion 52 includes a first annular region 522 and a second annular region 523, where the second annular region 523 surrounds the first annular region 522, and is spaced apart from the first annular region 522. The second hole 53 is formed in the middle of the first annular region 522. The plurality of partition regions 521 are located between the first annular region 522 and the second annular region 523, and connect the first annular region 522 and the second annular region 523.

In some embodiments, in a radial direction of the current collecting member 50, a size, along the circumferential direction X, of the first hole 51 gradually increases from inside outwards. Specifically, a bigger size of the first hole 51 along the circumferential direction X is accompanied by a smaller size of the partition region 521 along the circumferential direction X; and the circumference of the current collecting member 50 increases as its radius increases, so the size of the partition region 521 along the circumferential direction X can meet the requirement even if the size, along the circumferential direction X, of an outer end of the first hole 51 increases. Thus, the current collecting member 50 has uniform strength and is less likely to break. For example, the radial direction of the current collecting member 50 is the same as that of the base portion 52.

In some embodiments, the first hole 51 may take the shape of a sector, a triangle, a trapezoid or other shapes. The plurality of first holes 51 have the same shape and size.

In some embodiments, the partition region 521 is roughly a rectangle whose size along the circumferential direction X is constant. The plurality of partition regions 521 have the same shape and size.

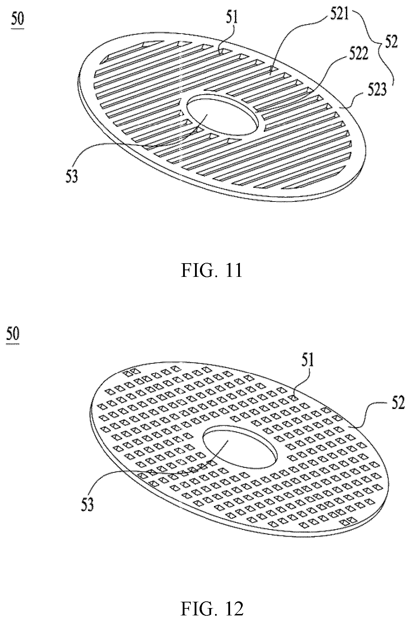

FIG. 11 is a schematic structural diagram of the current collecting member 50 of the battery cell 7 according to other embodiments of this application. As shown in FIG. 11, in some embodiments, the plurality of first holes 51 of the current collecting member 50 are roughly arranged in parallel.

The base portion 52 includes a first annular region 522, a second annular region 523 and a plurality of partition regions 521, where the second annular region 523 surrounds the first annular region 522 and is spaced apart from the first annular region 522, and the plurality of partition regions 521 are arranged between the first annular region 522 and the second annular region 523. The first hole 51 is formed between two adjacent partition regions 521.

The partition region 521 is roughly in a strip shape, and the plurality of partition regions 521 are arranged in parallel. Both of two ends of some partition regions 521 are connected to an inner wall of the second annular region 523, and the two ends of some other partition regions 521 are connected to the inner wall of the second annular region 523 and an outer wall of the first annular region 522 respectively.

FIG. 12 is a schematic structural diagram of the current collecting member 50 of the battery cell 7 according to yet other embodiments of this application. As shown in FIG. 12, in some embodiments, a plurality of first holes 51 are arranged along a first direction to form a first hole row, and a plurality of first hole rows are arranged along a second direction, where the first direction and the second direction intersect. In some embodiments, the first direction is perpendicular to the second direction.

In some embodiments, the first hole 51 may take the shape of a rectangle, a circle, a triangle, a trapezoid or other shapes.

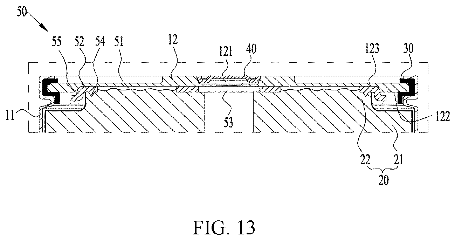

FIG. 13 is a schematic view of a local cross section of the battery cell 7 according to other embodiments of this application. As shown in FIG. 13, in some embodiments, the current collecting member 50 includes a second protrusion portion 55 connected to the base portion 52, where the second protrusion portion 55 protrudes, relative to the base portion 52, towards the body portion 21, and the second protrusion portion 55 surrounds the tab portion 22. The second protrusion portion 55 extends from an edge of the base portion 52 towards a direction approaching the body portion 21.

The tab portion 22 includes a metal foil wound in a plurality of turns, and the second protrusion portion 55 is able to gather the tab portion 22.

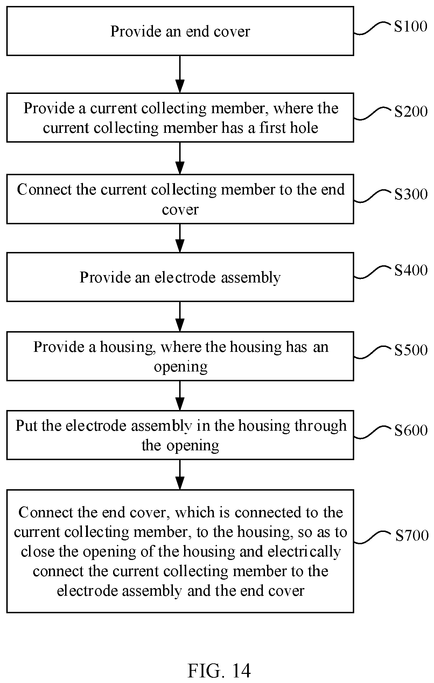

FIG. 14 is a schematic flowchart of a manufacturing method of battery cell according to some embodiments of this application.

As shown in FIG. 14, the manufacturing method of battery cell includes:
S100. Provide an end cover.
S200. Provide a current collecting member, where the current collecting member has a first hole.
S300. Connect the current collecting member to the end cover.
S400. Provide an electrode assembly.
S500. Provide a housing, where the housing has an opening.
S600. Put the electrode assembly in the housing through the opening.
S700. Connect the end cover, which is connected to the current collecting member, to the housing, so as to close the opening of the housing and electrically connect the current collecting member to the electrode assembly and the end cover.

The current collecting member is at least partly located between the electrode assembly and the end cover and abuts against the electrode assembly, and the first hole is configured to accommodate part of the electrode assembly and make the electrode assembly contact a hole wall of the first hole.

It should be noted that for a related structure of a battery cell manufactured using the foregoing manufacturing method of battery cell, reference may be made to the battery cell provided in the preceding embodiments.

During assembling a battery cell based on the foregoing manufacturing method of battery cell, it is not necessary to perform the steps in order as described. In other words, the steps may be performed in the order mentioned in the embodiment, or may be performed in a different order from that in the embodiment, or may be performed simultaneously. For example, step S100 and step S200 are not limited to a particular order, and may be performed at the same time; and steps S400, S500 and S600 may be performed before steps S100, S200, and S300.

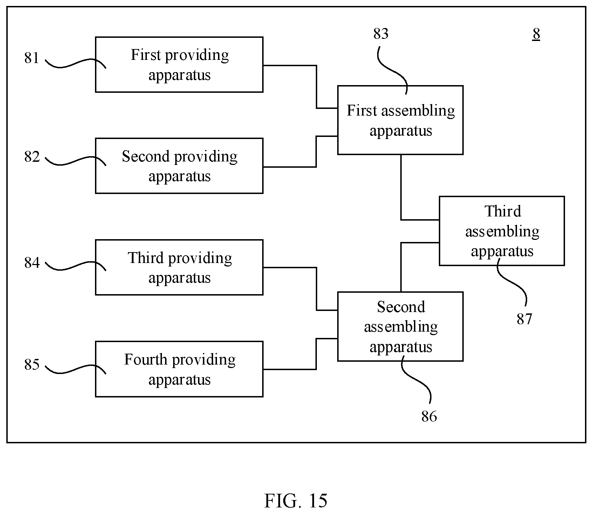

FIG. 15 is a schematic block diagram of a manufacturing system of battery cell according to some embodiments of this application.

As shown in FIG. 15, the manufacturing system 8 of battery cell of the embodiment of this application includes: a first providing apparatus 81 configured to provide an end cover; a second providing apparatus 82 configured to provide a current collecting member, where the current collecting member has a first hole; a first assembling apparatus 83 configured to connect the current collecting member to the end cover; a third providing apparatus 84 configured to provide an electrode assembly; a fourth providing apparatus 85 configured to provide a housing, where the housing has an opening; a second assembling apparatus 86 configured to put, through the opening, the electrode assembly into the housing; and a third assembling apparatus 87 configured to connect the end cover, which is connected to the current collecting member, to the housing, so as to close the opening of the housing and electrically connect the current collecting member to the electrode assembly and the end cover. The current collecting member is at least partly located between the electrode assembly and the end cover and abuts against the electrode assembly, and the first hole is configured to accommodate part of the electrode assembly and make the electrode assembly contact a hole wall of the first hole.

For a related structure of a battery cell manufactured by the foregoing manufacturing system 8, refer to the battery cell provided in the preceding embodiments.

It should be noted that, in absence of conflicts, the embodiments and features in the embodiments in this application may be mutually combined.

## Claims

1. A battery cell (7), comprising:
an electrode assembly (20);
a housing (11) configured to accommodate the electrode assembly (20) and having an opening an end cover (12) configured to close the opening of the housing (11); and
a current collecting member (50) configured to electrically connect the electrode assembly (20) to the end cover (12), wherein the current collecting member (50) is at least partly located between the electrode assembly (20) and the end cover (12) and abuts against the electrode assembly (20);
the current collecting member (50) has a first hole (51), wherein the first hole (51) is configured to accommodate part of the electrode assembly (20) and make the electrode assembly (20) contact a hole wall of the first hole (51), so as to increase an area of electrical connection between the current collecting member (50) and the electrode assembly (20); and
**characterized in that**, by abutting the current collecting member (50) against the electrode assembly (20), the current collecting member (50) is connected to the electrode assembly (20) without welding; and
**in that** the end cover (12) has a first surface (122) facing the electrode assembly (20) and a first depression portion (123) recessed relative to the first surface (122), and a base portion (52 of the current collecting member (50) is at least partly accommodated in the first depression portion (123).

2. The battery cell (7) according to claim 1, wherein the first hole (51) is provided in plurality.

3. The battery cell (7) according to claim 2, wherein the plurality of first holes (51) are equally spaced along a circumferential direction of the current collecting member (50).

4. The battery cell (7) according to any one of claims 1 to 3, wherein in a radial direction of the current collecting member, a size, along the circumferential direction, of the first hole (51) gradually increases from inside outwards.

5. The battery cell (7) according to any one of claims 1 to 4, wherein
the current collecting member (50) comprises a base portion (52) and a first protrusion portion (54) connected with the base portion (52), wherein the base portion (52) is located between the electrode assembly (20) and the end cover (12) and abuts against the electrode assembly (20), the first hole (51) is formed at the base portion (52), and the first protrusion portion (54) protrudes, relative to the base portion (52), towards the electrode assembly (20) and is inserted to the electrode assembly (20); and,
wherein preferably, a cross-sectional area, perpendicular to a thickness direction of the base portion (52), of the first protrusion portion (54) gradually decreases along a direction leaving the base portion (52).

6. The battery cell (7) according to claim 5, wherein the first protrusion portion (54) is annular.

7. The battery cell (7) according to any one of claims 1 to 6, wherein
the electrode assembly (20) comprises a body portion (21) and a tab portion (22) connected with the body portion (21);
the current collecting member (50) comprises a base portion (52) and a second protrusion portion (55) connected with the base portion (52), wherein the tab portion (22) is located between the body portion (21) and the base portion (52), the base portion (52) abuts against the tab portion (22), the first hole (51) is formed at the base portion (52), and the tab portion (22) partly extends into the first hole (51) and contacts the hole wall of the first hole (51); and
the second protrusion portion (55) protrudes, relative to the base portion (52), towards the body portion (21), and surrounds the tab portion (22).

8. The battery cell (7) according to any one of claims 1 to 7, wherein
the end cover (12) has an electrolyte injection hole (121) for injecting electrolyte, and the current collecting member (50) has a second hole (53), wherein the second hole (53) runs through the current collecting member (50) along a thickness direction of the current collecting member (50), and the second hole (53) and the electrolyte injection hole (121) are disposed opposite each other along the thickness direction.

9. The battery cell (7) according to any one of claims 1 to 8, wherein the first hole (51) runs through the current collecting member (50) along the thickness direction of the current collecting member (50).

10. The battery cell (7) according to any one of claims 1 to 9,
wherein
the current collecting member (50) is welded to the end cover (12); and/or
the current collecting member (50) and the first depression portion (123) are interference fitted.

11. The battery cell (7) according to any one of claims 1 to 10, wherein the current collecting member (50) abuts against the electrode assembly (20) via a conductive medium.

12. A battery (2), comprising at least one battery cell (7) according to any one of claims 1 to 11.

13. An electric device, comprising the battery (2) according to claim 12, wherein the battery (2) is configured to supply electrical energy.

14. A manufacturing method of battery cell (7), comprising:
providing (S100) an end cover;
providing (S200) a current collecting member, wherein the current collecting member has a first hole;
connecting (S300) the current collecting member to the end cover;
providing (S400) an electrode assembly;
providing (S500) a housing, wherein the housing has an opening;
putting (S600), through the opening, the electrode assembly into the housing; and
connecting (S700) the end cover, which is connected to the current collecting member, to the housing, so as to close the opening of the housing and electrically connect the current collecting member to the electrode assembly and the end cover;
wherein the current collecting member is at least partly located between the electrode assembly and the end cover and abuts against the electrode assembly;
and the first hole is configured to accommodate part of the electrode assembly and make the electrode assembly contact a hole wall of the first hole, **characterized in that**, by abutting the current collecting member against the electrode assembly, the current collecting member is connected to the electrode assembly without welding; and **in that** the end cover has a first surface facing the electrode assembly and a first depression portion recessed relative to the first surface, and a base portion of the current collecting member is at least partly accommodated in the first depression portion.

## Patentansprüche

1. Batteriezelle (7), umfassend:
eine Elektrodenanordnung (20);
ein Gehäuse (11), das dazu ausgelegt ist, die Elektrodenanordnung (20) aufzunehmen, und das eine Öffnung aufweist;
eine Endabdeckung (12), die dazu ausgelegt ist, die Öffnung des Gehäuses (11) zu schließen; und
ein Stromsammelelement (50), das dazu ausgelegt ist, die Elektrodenanordnung (20) elektrisch mit der Endabdeckung (12) zu verbinden, wobei sich das Stromsammelelement (50) zumindest teilweise zwischen der Elektrodenanordnung (20) und der Endabdeckung (12) befindet und an der Elektrodenanordnung (20) anliegt;
wobei das Stromsammelelement (50) ein erstes Loch (51) aufweist, wobei das erste Loch (51) dazu ausgelegt ist, einen Teil der Elektrodenanordnung (20) aufzunehmen und die Elektrodenanordnung (20) mit einer Lochwand des ersten Lochs (51) in Kontakt zu bringen, um einen Bereich einer elektrischen Verbindung zwischen dem Stromsammelelement (50) und der Elektrodenanordnung (20) zu vergrößern; und
**dadurch gekennzeichnet, dass** durch Anliegen des Stromsammelelements (50) an der Elektrodenanordnung (20) das Stromsammelelement (50) ohne Schweißen mit der Elektrodenanordnung (20) verbunden ist, und
dadurch, dass die Endabdeckung (12) eine erste Oberfläche (122), die der Elektrodenanordnung (20) zugewandt ist, und einen ersten Vertiefungsabschnitt (123) aufweist, der relativ zu der ersten Oberfläche (122) vertieft ist, und ein Basisabschnitt (52) des Stromsammelelements (50) zumindest teilweise in dem ersten Vertiefungsabschnitt (123) aufgenommen ist.

2. Batteriezelle (7) nach Anspruch 1, wobei das erste Loch (51) mehrfach vorgesehen ist.

3. Batteriezelle (7) nach Anspruch 2, wobei die Vielzahl von ersten Löchern (51) entlang einer Umfangsrichtung des Stromsammelelements (50) gleichmäßig beabstandet ist.

4. Batteriezelle (7) nach einem der Ansprüche 1 bis 3, wobei in einer radialen Richtung des Stromsammelelements eine Größe entlang der Umfangsrichtung des ersten Lochs (51) von innen nach außen allmählich zunimmt.

5. Batteriezelle (7) nach einem der Ansprüche 1 bis 4, wobei
das Stromsammelelement (50) einen Basisabschnitt (52) und einen ersten Vorsprungsabschnitt (54) umfasst, der mit dem Basisabschnitt (52) verbunden ist, wobei sich der Basisabschnitt (52) zwischen der Elektrodenanordnung (20) und der Endabdeckung (12) befindet und an der Elektrodenanordnung (20) anliegt, das erste Loch (51) an dem Basisabschnitt (52) gebildet ist und der erste Vorsprungsabschnitt (54) relativ zu dem Basisabschnitt (52) in Richtung der Elektrodenanordnung (20) vorsteht und in die Elektrodenanordnung (20) eingesetzt ist; und
wobei vorzugsweise eine Querschnittsfläche, senkrecht zu einer Dickenrichtung des Basisabschnitts (52), des ersten Vorsprungsabschnitts (54) entlang einer Richtung, die den Basisabschnitt (52) verlässt, allmählich abnimmt.

6. Batteriezelle (7) nach Anspruch 5, wobei der erste Vorsprungsabschnitt (54) ringförmig ist.

7. Batteriezelle (7) nach einem der Ansprüche 1 bis 6, wobei
die Elektrodenanordnung (20) einen Körperabschnitt (21) und einen mit dem Körperabschnitt (21) verbundenen Laschenabschnitt (22) umfasst;
das Stromsammelelement (50) einen Basisabschnitt (52) und einen zweiten mit dem Basisabschnitt (52) verbundenen Vorsprungsabschnitt (55) umfasst, wobei sich der Laschenabschnitt (22) zwischen dem Körperabschnitt (21) und dem Basisabschnitt (52) befindet, der Basisabschnitt (52) an dem Laschenabschnitt (22) anliegt, das erste Loch (51) an dem Basisabschnitt (52) gebildet ist, und sich der Laschenabschnitt (22) teilweise in das erste Loch (51) erstreckt und die Lochwand des ersten Lochs (51) kontaktiert; und
der zweite Vorsprungsabschnitt (55) relativ zu dem Basisabschnitt (52) in Richtung des Körperabschnitts (21) vorsteht und den Laschenabschnitt (22) umgibt.

8. Batteriezelle (7) nach einem der Ansprüche 1 bis 7, wobei
die Endabdeckung (12) ein Elektrolyteinspritzloch (121) zum Einspritzen von Elektrolyt aufweist und das Stromsammelelement (50) ein zweites Loch (53) aufweist, wobei das zweite Loch (53) durch das Stromsammelelement (50) entlang einer Dickenrichtung des Stromsammelelements (50) verläuft und das zweite Loch (53) und das Elektrolyteinspritzloch (121) entlang der Dickenrichtung einander gegenüberliegend angeordnet sind.

9. Batteriezelle (7) nach einem der Ansprüche 1 bis 8, wobei das erste Loch (51) durch das Stromsammelelement (50) entlang der Dickenrichtung des Stromsammelelements (50) verläuft.

10. Batteriezelle (7) nach einem der Ansprüche 1 bis 9,
wobei
das Stromsammelelement (50) mit der Endabdeckung (12) verschweißt ist; und/oder
das Stromsammelelement (50) und der erste Vertiefungsabschnitt (123) eingepasst sind.

11. Batteriezelle (7) nach einem der Ansprüche 1 bis 10, wobei das Stromsammelelement (50) über ein leitfähiges Medium an der Elektrodenanordnung (20) anliegt.

12. Batterie (2), umfassend mindestens eine Batteriezelle (7) nach einem der Ansprüche 1 bis 11.

13. Elektrische Vorrichtung, umfassend die Batterie (2) nach Anspruch 12, wobei die Batterie (2) dazu ausgelegt ist, elektrische Energie bereitzustellen.

14. Herstellungsverfahren für die Batteriezelle (7), umfassend:
Bereitstellen (S100) einer Endabdeckung;
Bereitstellen (S200) eines Stromsammelelements, wobei das Stromsammelelement ein erstes Loch aufweist;
Verbinden (S300) des Stromsammelelements mit der Endabdeckung;
Bereitstellen (S400) einer Elektrodenanordnung;
Bereitstellen (S500) eines Gehäuses, wobei das Gehäuse eine Öffnung aufweist;
Einsetzen (S600) der Elektrodenanordnung durch die Öffnung in das Gehäuse; und
Verbinden (S700) der Endabdeckung, die mit dem Stromsammelelement verbunden ist, mit dem Gehäuse, um die Öffnung des Gehäuses zu verschließen und das Stromsammelelement elektrisch mit der Elektrodenanordnung und der Endabdeckung zu verbinden;
wobei sich das Stromsammelelement zumindest teilweise zwischen der Elektrodenanordnung und der Endabdeckung befindet und an der Elektrodenanordnung anliegt;
und das erste Loch dazu ausgelegt ist, einen Teil der Elektrodenanordnung aufzunehmen und die Elektrodenanordnung mit einer Lochwand des ersten Lochs in Kontakt zu bringen, **dadurch gekennzeichnet, dass** durch Anliegen des Stromsammelelements an der Elektrodenanordnung das Stromsammelelement ohne Schweißen mit der Elektrodenanordnung verbunden ist, und dadurch, dass die Endabdeckung eine erste Oberfläche, die der Elektrodenanordnung zugewandt ist, und einen ersten Vertiefungsabschnitt aufweist, der relativ zu der ersten Oberfläche vertieft ist, und ein Basisabschnitt des Stromsammelelements zumindest teilweise in dem ersten Vertiefungsabschnitt aufgenommen ist.

## Revendications

1. Élément de batterie (7), comprenant :
un ensemble électrode (20) ;
un logement (11) configuré pour accueillir l'ensemble électrode (20) et ayant une ouverture ;
un couvercle d'extrémité (12) configuré pour fermer l'ouverture du logement (11) ; et
un organe collecteur de courant (50) configuré pour connecter électriquement l'ensemble électrode (20) au couvercle d'extrémité (12), dans lequel l'organe collecteur de courant (50) est au moins partiellement situé entre l'ensemble électrode (20) et le couvercle d'extrémité (12) et est en butée contre l'ensemble électrode (20) ;
l'organe collecteur de courant (50) a un premier trou (51), dans lequel le premier trou (51) est configuré pour accueillir une partie de l'ensemble électrode (20) et mettre l'ensemble électrode (20) en contact avec une paroi de trou du premier trou (51), de manière à augmenter une zone de connexion électrique entre l'organe collecteur de courant (50) et l'ensemble électrode (20) ; et
**caractérisé en ce que**, en mettant en butée l'organe collecteur de courant (50) contre l'ensemble électrode (20), l'organe collecteur de courant (50) est connecté à l'ensemble électrode (20) sans soudure ; et
**en ce que** le couvercle d'extrémité (12) a une première surface (122) faisant face à l'ensemble électrode (20) et une première portion de dépression (123) en retrait par rapport à la première surface (122), et une portion de base (52) de l'organe collecteur de courant (50) est au moins partiellement accueillie dans la première portion de dépression (123).

2. Élément de batterie (7) selon la revendication 1, dans lequel le premier trou (51) est fourni en pluralité.

3. Élément de batterie (7) selon la revendication 2, dans lequel la pluralité de premiers trous (51) sont espacés de manière égale le long d'une direction circonférentielle de l'organe collecteur de courant (50).

4. Élément de batterie (7) selon l'une quelconque des revendications 1 à 3, dans lequel dans une direction radiale de l'organe collecteur de courant, une taille, le long de la direction circonférentielle, du premier trou (51) augmente progressivement de l'intérieur vers l'extérieur.

5. Élément de batterie (7) selon l'une quelconque des revendications 1 à 4, dans lequel
l'organe collecteur de courant (50) comprend une portion de base (52) et une première portion de saillie (54) connectée à la portion de base (52), dans lequel la portion de base (52) est située entre l'ensemble électrode (20) et le couvercle d'extrémité (12) et est en butée contre l'ensemble électrode (20), le premier trou (51) est formé au niveau de la portion de base (52), et la première portion de saillie (54) fait saillie, par rapport à la portion de base (52), vers l'ensemble électrode (20) et est insérée dans l'ensemble électrode (20) ; et,
dans lequel préférablement, une zone en coupe transversale, perpendiculaire à une direction d'épaisseur de la portion de base (52), de la première portion de saillie (54) diminue progressivement le long d'une direction quittant la portion de base (52).

6. Élément de batterie (7) selon la revendication 5, dans lequel la première portion de saillie (54) est annulaire.

7. Élément de batterie (7) selon l'une quelconque des revendications 1 à 6, dans lequel
l'ensemble électrode (20) comprend une portion de corps (21) et une portion de languette (22) connectée à la portion de corps (21) ;
l'organe collecteur de courant (50) comprend une portion de base (52) et une seconde portion de saillie (55) connectée à la portion de base (52), dans lequel la portion de languette (22) est située entre la portion de corps (21) et la portion de base (52), la portion de base (52) est en butée contre la portion de languette (22), le premier trou (51) est formé au niveau de la portion de base (52), et la portion de languette (22) s'étend partiellement dans le premier trou (51) et entre en contact avec la paroi de trou du premier trou (51) ; et
la seconde portion de saillie (55) fait saillie, par rapport à la portion de base (52), vers la portion de corps (21), et entoure la portion de languette (22).

8. Élément de batterie (7) selon l'une quelconque des revendications 1 à 7, dans lequel
le couvercle d'extrémité (12) a un trou d'injection d'électrolyte (121) pour injecter de l'électrolyte, et l'organe collecteur de courant (50) a un second trou (53), dans lequel le second trou (53) traverse l'organe collecteur de courant (50) le long d'une direction d'épaisseur de l'organe collecteur de courant (50), et le second trou (53) et l'orifice d'injection d'électrolyte (121) sont disposés à l'opposé l'un de l'autre le long de la direction d'épaisseur.

9. Élément de batterie (7) selon l'une quelconque des revendications 1 à 8, dans lequel le premier trou (51) traverse l'organe collecteur de courant (50) le long de la direction d'épaisseur de l'organe collecteur de courant (50).

10. Élément de batterie (7) selon l'une quelconque des revendications 1 à 9,
dans lequel
l'organe collecteur de courant (50) est soudé au couvercle d'extrémité (12) ; et/ou
l'organe collecteur de courant (50) et la première portion de dépression (123) sont ajustés avec serrage.

11. Elément de batterie (7) selon l'une quelconque des revendications 1 à 10, dans lequel l'organe collecteur de courant (50) est en butée contre l'ensemble électrode (20) par l'intermédiaire d'un milieu conducteur.

12. Batterie (2), comprenant au moins un élément de batterie (7) selon l'une quelconque des revendications 1 à 11.

13. Dispositif électrique, comprenant la batterie (2) selon la revendication 12, dans lequel la batterie (2) est configurée pour apporter de l'énergie électrique.

14. Procédé de fabrication d'élément de batterie (7), comprenant :
la fourniture (S100) d'un couvercle d'extrémité ;
la fourniture (S200) d'un organe collecteur de courant, dans lequel l'élément collecteur de courant a un premier trou ;
la connexion (S300) de l'organe collecteur de courant au couvercle d'extrémité ;
la fourniture (S400) d'un ensemble électrode ;
la fourniture (S500) d'un logement, dans lequel le logement a une ouverture ;
le fait de mettre (S600), à travers l'ouverture, l'ensemble électrode dans le logement ; et
la connexion (S700) du couvercle d'extrémité, qui est connecté à l'organe collecteur de courant, au logement, de manière à fermer l'ouverture du logement et à connecter électriquement l'organe collecteur de courant à l'ensemble électrode et au couvercle d'extrémité ;
dans lequel l'organe collecteur de courant est situé au moins partiellement entre l'ensemble électrode et le couvercle d'extrémité et est en butée contre l'ensemble électrode ;
et le premier trou est configuré pour accueillir une partie de l'ensemble électrode et mettre l'ensemble électrode en contact avec une paroi de trou du premier trou, **caractérisé en ce que**, en mettant en butée l'organe collecteur de courant contre l'ensemble électrode, l'organe collecteur de courant est connecté à l'ensemble électrode sans soudure ; et **en ce que** le couvercle d'extrémité a une première surface faisant face à l'ensemble électrode et une première portion de dépression en retrait par rapport à la première surface, et une portion de base de l'élément collecteur de courant est au moins partiellement accueillie dans la première portion de dépression.
